# EUROPÄISCHE PATENTSCHRIFT

(11) **EP 0 421 134 B1**
(45) Veröffentlichungstag und Bekanntmachung des Hinweises auf die Patenterteilung: **08.11.1995**
(21) Anmeldenummer: 90117032.4
(22) Anmeldetag: 05.09.1990
(51) Int. Cl.: B29C 45/77

(54) **Verfahren zur Herstellung von Formteilen aus plastifizierbaren Kunststoff-Formmassen durch Spritzgiessen**
Process for the manufacturing of moulded parts from a plasticizable synthetic material by injection moulding
Procédé pour la fabrication par injection de pièces moulées à partir de masses de matière plastique

(30) Priorität: 03.10.1989 DE 3932960
(43) Veröffentlichungstag der Anmeldung: 10.04.1991
(73) Patentinhaber: Battenfeld GmbH, D-58540 Meinerzhagen (DE)
(72) Erfinder: Schröder, Klaus, Dipl.-Ing., D-5277 Marienheide (DE)
(74) Vertreter: Müller, Gerd, Dipl.-Ing.

(56) Entgegenhaltungen:
- GB-A- 2 218 033
- PATENT ABSTRACTS OF JAPAN vol. 14, no. 327 (M-998)(4270) 13. Juli 1990 & JP-A-2 111 518 (TOSHIBA MACH CO LTD ) 24. April 1990
- PATENT ABSTRACTS OF JAPAN vol. 12, no. 332 (M-738)(3179) 8. September 1988 & JP-A-63 94 806 (TOSHIBA MACH CO LTD ) 25. April 1988
- PATENT ABSTRACTS OF JAPAN vol. 11, no. 191 (M-600)(2638) 19. Juni 1987 & JP-A-62 18 234 (MITSUBISHI HEAVY IND LTD ) 27. Januar 1987
- PATENT ABSTRACTS OF JAPAN vol. 10, no. 304 (M-526)(2360) 16. Oktober 1986 & JP-A-61 116 520 (TOSHIBA MACH CO LTD ) 4. Juni 1986

## Beschreibung

Die Erfindung betrifft ein Verfahren zur Herstellung von Formteilen aus plastifizierbaren, härtbaren bzw. vernetzenden Kunststoff-Formmassen durch Spritzgießen unter Verwendung eines teilbaren Formwerkzeuges, wobei die Spritzgußmasse nach vollständiger volumetrischer Füllung des Werkzeuginnenraumes während der Aushärtphase zeitlichen Änderungen ihrer Zustandsparameter wie Temperatur, Vernetzungsgrad, Druck oder spezifischem Volumen unterworfen ist und diese im Innenraum des geschlossenen Werkzeugs einen an- und absteigenden Verlauf des Forminnendrucks zur Folge haben.

Bei der Herstellung von Formteilen duch ein Spritzgießverfahren der eingangs genannten Art besteht ein bekanntes Problem darin, Teile von identischer Qualität zu erzeugen. Die hierbei zu überwindende Schwierigkeit ergibt sich daraus, bei dem Zusammenwirken einer Reihe unterschiedlicher Faktoren, die das Gewicht, die Festigkeit und Homogenität der Teile im Verlauf eines Gießzyklus zu beeinflussen vermögen, ein Produkt mit reproduzierbaren Qualitätsmerkmalen herzustellen. Solche variable Faktoren sind bspw. das Einspritzvolumen, die Viskosität der Schmelze, die Zyklusgeschwindigkeit, der Einspritzdruck, der Forminnendruck sowie Unterschiede des Kunststoffmaterials. Alle diese Faktoren beeinflussen letztenendes die Qualität der erzeugten Produkte.

So können bspw. bei der Verarbeitung von Duroplasten im Spritzgießverfahren u.a. folgende Fehler auftreten, welche die Teile-Qualität negativ beeinflussen: Unterschiedliche Verdichtungen, Spannungen, Verzug, Festigkeits-Unterschiede, Materialentmischungen, Füllstoff-Orientierung, Lufteinschlüsse, Schwindungsunterschiede.

Um zumindest die Einflußgröße dieser Probleme zu verringern, sind bereits eine Reihe von Vorschlägen bekanntgeworden. Insbesondere wurde erkannt, daß Durckschwankungen des Forminnendrucks während der Aushärtungsphase bzw. der Haltephase des Zyklus zu Ungleichmäßigkeit der Produktqualität führen. Es wurde daher vorgeschlagen, ein im Verlauf der Vernetzungsphase auftretendes Maximum des Forminnendrucks zu messen und diesen Parameter als Steuergröße zu verwenden, um den Maximaldruck in der Gießform während jedes folgenden Spritzgießzyklus konstant zu halten.

Hierzu ist aus der DE-OS 24 02 798 ein Verfahren bekannt, bei welchem der Forminnendruck während der Haltephase nach Umwandlung in ein elektrisches Signal über ein vorgegebenes Zeitintervall integriert und mit einem Bezugsignal verglichen wird, um daraus ein Fehlersignal abzuleiten, welches dann dazu verwendet wird, den in der Form beim nächsten Zyklus aufzubringenden Druck derart abzuändern, daß das zuvor erwähnte Fehlersignal eleminiert wird.

Ein wesentlicher Nachteil dieses bekannten Verfahrens beruht darin, daß eine unmittelbare Beeinflussung des zeitlichen Verlaufs vom Forminnendruck während der Vernetzungsphase nicht stattfindet und somit von Zyklus zu Zyklus unterschiedliche Schwankungen des Forminnendrucks, ausgelöst durch das Zusammenwirken der vorerwähnten unterschiedlichen Betriebsparameter, bei dem bekannten Regelverfahren bzw. dem entsprechenden Steuergerät zur Steuerung des Druckes in der Gießform, keine Berücksichtigung findet.

Die bekannten Steuerungsmöglichkeit zur Beeinflussung des Druckaufbaus während der Haltephase haben weiterhin den Nachteil, daß Schwankungen in den Fließeigenschaften, die bei Duromeren und Elastomeren häufig auftreten, aufgrund der Steuerung des Prozesses nicht abgefangen werden. Eine Untersuchung von H.A. Hängesbach, Dissertation an der RWTH Aachen, 1976, IKV-Archiv-Nr. DS 76/4 kommt daher auch zu dem Ergebnis, daß zur Erzielung konstanter Formeigenschaften im Bereich der Einspritzphase sich eine Regelung des Werkzeuginnendruckverlaufs während dieser Phase als nicht sinnvoll erweist. Zur Verbesserung der Prozeßführung wird daher eine Schneckenvorlaufgeschwindigkeitsregelung während der Einspritzphase vorgeschlagen.

Aber auch diese Regelung bleibt im Endergebnis unbefriedigend, wenn nicht zugleich eine exakt reproduizierbare Füllung der Form mit einem genau ausgewogenen Volumen an Formmasse eingehalten wird.

Ein aus der europäischen Patentanmeldung 0 315 999 bekanntgewordenes Verfahren zur reproduzierbaren Werkzeugfüllung mit Formmassen sieht hierzu eine von Schuß zu Schuß wirkende Regelung der Werkzeugfüllung vor. Dies wird dadurch erreicht, daß ein oder mehrere Forminnendrucksignale während der Nachdruckphase gemessen werden und diese zur Steuerung oder Regelung des Formfüllzustandes herangezogen werden.

Ein wesentlicher Vorteil des bekannten Verfahrens besteht darin, daß das Produktionsverfahren durch die Regelung auf schwankende Rohstoffeigenschaften flexibel reagiert und infolgedessen Nacharbeitskosten, Prüfkosten und Ausschußproduktion vermindert oder vermieden werden.

Durch die JP-A-62-18234 und JP-A-63-94806 sind Verfahren zum Spritzprägen bekanntgeworden, bei denen thermoplatischer Kunststoff in den Spalt eines teilweise geöffneten Werkzeuges eingespritzt wird. Im Anschluß daran, d.h. nach dem Einspritzen bzw. völligen Füllen des Werkzeuges mit Material wird die Schließkraft pulsierend aufgebracht. Mit diesen bekannten Verfahren läßt sich der Werkzeuginnendruck nicht konstant halten.

Der Erfindung liegt die Aufgabe zugrunde, den transitorischen Verlauf des Forminnendrucks während der Vernetzungs- und Aushärtephase der Spritzgußmasse zu vergleichmäßigen und dadurch eine Verbesserung der Prozeßführung bei der Herstellung von Formteilen aus plastifizierbaren Kunststoff-Formmassen durch Spritzgießen zu erreichen.

Diese Aufgabe wird erfindungsgemäß dadurch gelöst, daß den Druckschwankungen im Innenraum des Werkzeugs durch Einwirkung von Druckimpulsen über wenigstens eine Außenfläche des Formwerkzeugs beim Einspritzen des Kunststoffs entgegengewirkt wird, wobei die Druckhöhe der Druckimpulse nach Maßgebe des Druckverlaufs des Forminnendrucks veränderlich und zu diesem im gegenläufigen Sinne wirkend selbsttätig eingestellt wird.

Die mit der Erfindung erzielbaren Vorteile bestehen darin, daß ein überhöhter Forminnendruck, der bei entsprechenden Formgeometrien zu Maßabweichungen oder Verschleiß führen kann, vermieden wird. Der für die Artikelqualität entscheidende Verdichtungsdruck wird nicht vom Spritzdruck beeinflußt, sondern durch das erfindungsgemäße Verfahren in vergleichsweise engen Grenzen konstant gehalten. Ein zum Überspritzen führender Überdruck innerhalb des Werkzeugeinsatzes wird mit Vorteil vermieden,was speziell bei der Fertigung von Präzisionsteilen von Wichtigkeit ist. Empfindliche Werkzeuge werden somit geschont. Die mit dem Verfahren erzielbare Steuerung der polymeren Energie während der Vernetzungsphasen führt zu homogenen und maßhaltigen Produkten mit übereinstimmenden Festigkeitseigenschaften.

Eine Ausgestaltung sieht vor, daß der Forminnendruck in fortlaufenden Messungen kontrolliert und dabei aus einer Änderung desselben ein erster Regelimpuls abgeleitet wird, nach dessen Maßgabe die Druckhöhe der Druckimpulse eingestellt wird. Mit Vorteil wird hierdurch erreicht, daß der Werkzeuginnendruck bestimmte voreingestellte Werte nicht überschreitet. Mit dem erfindungsgemäßen Verfahren wird nämlich die überraschende Wirkung erzielt, daß das Werkzeug, bildlich gesprochen, geregelt atmet.

Dies wird erfindungsgemäß dadurch erreicht, daß ein inkrementeller Anstieg des Forminnendrucks durch Verringerung und ein dekrementeller Abfall des Forminnendrucks durch Erhöhung der Druckimpulse ausgeglichen wird. Dies wird nach der Lehre der Erfindung erstmals dadurch erreicht, daß vermittels der veränderlich einstellbaren Druckimpulse der Forminnendruck bei einem inkrementellen Druckanstieg durch Vergrößerung des Raumvolumens und bei einem dekrementellen Druckabfall durch Verkleinerung des Raumvolumens des Formwerfizeuges ausgeglichen wird.

Das "atmen" des Werkzeugs kann mit Hilfe der regelbaren Druckimpulse unter Verwendung von an der Form ausgebildeten mechanischen Elementen erfolgen, bspw. durch nachgebende Klappen oder Austrittsventile. Bevorzugt wird jedoch das "Atmen" des Werkzeugs durch das Schließwerkzeug selber bewirkt.

Dies wird mit Vorteil dadurch erreicht, daß die nach Maßgabe der Größe des Regelimpulses einstellbaren Druckimpulse dem Formschließdruck überlagerte Druckkomponenten sind. Infolgedessen sieht eine Ausgestaltung des Verfahrens vor, daß bei fallendem Forminnendruck die Kraft des Formschließdrucks verstärkt und bei steigendem Forminnendruck die Kraft des Formschließdruckes verringert wird.

Eine sehr zweckmäßige Ausgestaltung der Erfindung sieht daher vor, daß die Vergrößerung des Raumvolumens des geschlossenen Formwerkzeuges durch Verringerung der Kraft des Formschließdruckes und die Verringerung des Raumvolumens durch Erhöhung der Kraft des Formschließdruckes herbeigeführt wird.

Weitere vorteilhafte Ausgestaltungen der Erfindung sind entsprechend den Merkmalen der Ansprüche 8 und 9 vorgesehen.

Ein Ausführungsbeispiel des erfindungsgemäßen Verfahrens beim Spritzgießen von Formteilen aus plastifizierbaren Kunststoff-Formmassen gemäß den Ansprüchen 1 bis 9 wird im folgenden anhand von Zeichnungen dargestellt. Es zeigen hierbei:
- Figur 1: ein Druckdiagramm mit schematischer Darstellung des Verlaufs von Forminnendruck (Massedruck) und Schließdruck und
- Figur 2: einen Stammbaum eines Regelschemas zur Durchführung des Verfahrens.

Das Verfahren nutzt die überraschende Erkenntnis, daß im Augenblick des Ansteigens des Forminnendrucks der Forminnenraum entsprechend vergrößert wird, was dadurch herbeigeführt werden kann, daß ein von außen gegen einen Teil des Formwerkzeuges wirkender Druck, bspw. der Schließdruck, entsprechend verringert wird, während in dem Augenblick, in welchem der Forminnendruck abfällt, der Forminnenraum ensprechend verkleinert wird, was dadurch herbeigeführt wird, daß ein von außen auf das Formwerkzeug wirkender Druckimpuls entsprechend erhöht wird. Der Forminnenraum wird auf diese Weise nach der Lehre der Erfindung dem Forminnendruck im gegenläufigen Sinne wirkend nachgefahren.

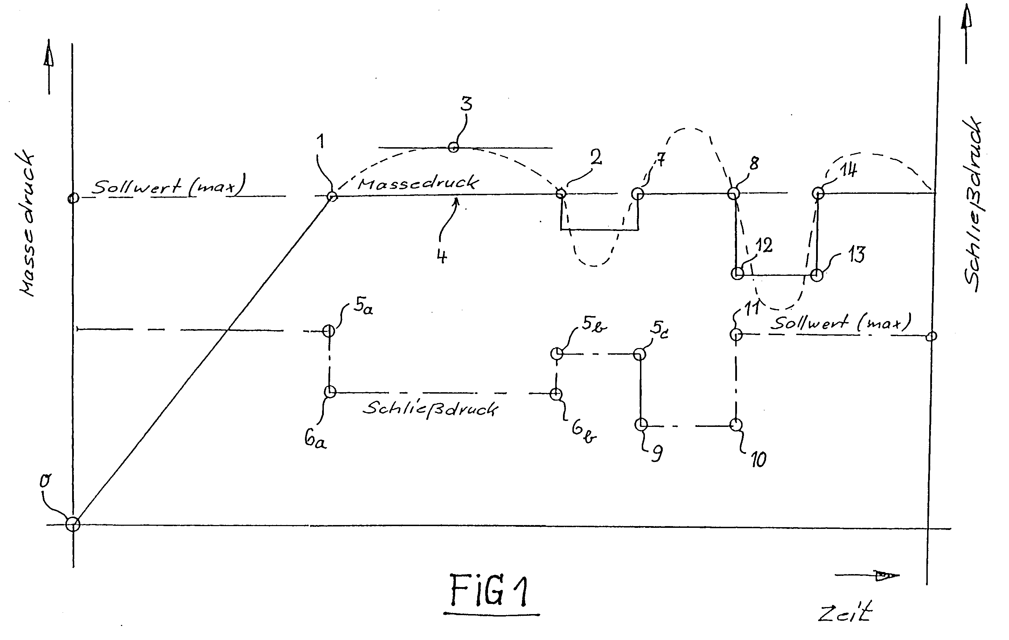

Das Druckdiagramm gemäß Fig. 1 zeigt mit der ununterbrochen durchgezogenen Linie das Ansteigen des Massedrucks von 0 im Schnittpunkt der Koordinaten Druck/Zeit bis auf den vorgegebenen Sollwert. Dieser Linienzug entspricht der volumetrischen Füllung des Werkzeuges durch den Injektionsvorgang. Es kann sich hierbei um eine geschwindigkeitsgeregelte Einspritzung handeln, dabei wird in aller Regel ein Temperaturniveau in der Art angefahren, daß die vernetzende Formmasse in eine Form eingebracht wird, die im Vergleich zur Formmasse eine höhere Temperatur aufweist. Dabei wird die Formmasse nach der Füllung der Form aufgeheizt, um die Vernetzungsreaktion zu starten. Durch die Aufheizung kommt es dabei zu einer Volumenexpansion. Wenn die Form dabei volumetrisch vollständig gefüllt ist, würde es unter der Voraussetzung eines unnachgiebigen Forminnenraumes zu einem Druckanstieg kommen, wie dieser zwischen den Punkten 1 und 2 des Massedruck-Diagramms rein schematisch durch die gestrichelte Kurve dargestellt ist. Dabei würde im Zenitpunkt 3 der maximale Anstieg des Forminnendrucks erreicht sein. Wie jedoch der idealisierte Verlauf des Massedrucks zwischen den Punkten 1 und 2 mit der geraden Linie 4 zeigt, wird dem Druckanstieg durch Erniedrigung des Schließdrucks entsprechend dem Verlauf des Schließdruck-Diagrammes zwischen den Punkten 5a, 6a, 6b, 5b erfolgreich entgegengewirkt. Umgekehrt wird ein Druckabfall des Massedrucks zwischen den Kurvenpunkten 2 und 7 durch Erhöhung des Schließdrucks auf das Niveau von 5b und 5c wenigstens zum Teil ausgeglichen. Eine neuerliche Tendenz zur Druckerhöhung als Folge der Vernetzungsreaktion zwischen den Diagrammpunkten 7 und 8 wird erfindungsgemäß durch entsprechende Erniedrigung des Schließdruckes nach dem Kurvenverlauf 9, 10 und 11 des Schließdruck-Diagramms abgebaut. Dann wird zum Ausgleich eines neuerlichen Massedruckabfalles entsprechend dem Diagrammverlauf zwischen den Punkten 12, 13 und 14 des Massedruckdiagramms durch Erhöhung des Schließdruckes gemäß Punkt 11 der Schließdruck-Kurve auf den maximalen Sollwert entgegengewirkt und damit ein zu starker Druckabfall ausgeglichen bzw. verhindert.

Wie zuvor ergänzend erwähnt, kann das "Atmen" des Werkzeuges auch unter Zuhilfenahme von geregelten mechanischen Elementen herbeigeführt oder zumindest unterstützt werden, wobei es sich um nachgebende Klappen, Austrittsventile oder ähnliche Einrichtungen des Werkzeugs handeln kann. Diese werden dann insbesondere bei komplizierter Geometrie der Werkzeuginnenräume zusätzlich zur unterschiedlichen geregelten Einstellung des Schließdruckes ebenfalls von außen durch einstellbare Druckimpulse im Sinne der Lehre der Erfindung beaufschlagt.

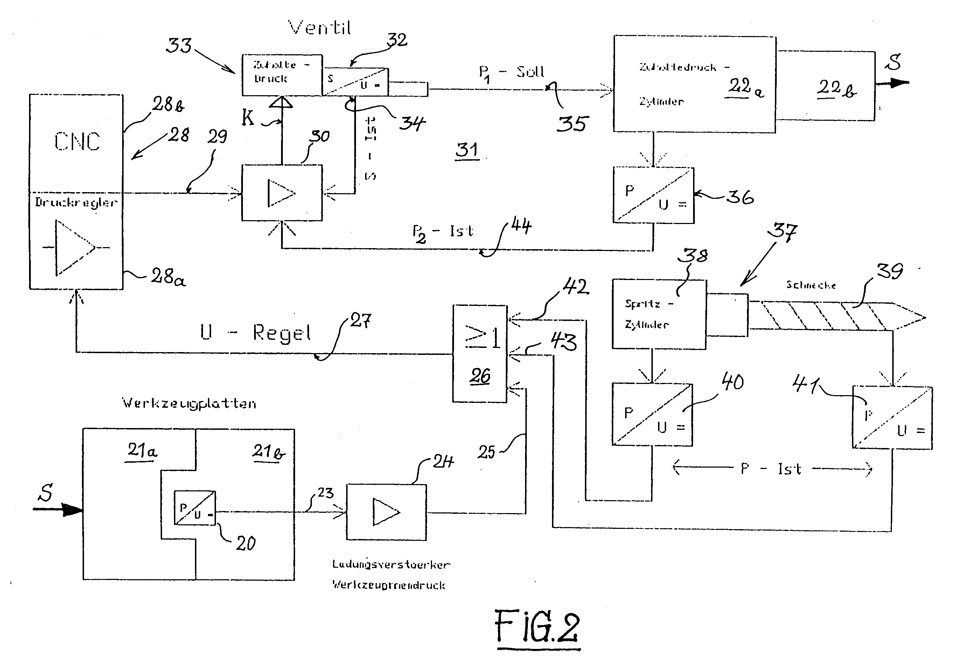

Eine elektronische Regelschaltung zur Durchführung des erfindungsgemäßen Verfahrens ist in der Fig. 2 dargestellt. Hauptmeßgröße der Regelung ist beim vorliegenden Verfahren der Forminnendruck. Dieser wird bspw. durch einen mit dem Forminnenraum in Verbindung stehenden Druckgeber 20 ermittelt. Das Werkzeug umfaßt die beiden Werkzeugplatten 21a, 21b. Diese werden durch den hydraulisch betätigbaren Schließdruckzylinder 22a, 22b mit dem geregelten Schließdruck S in der Füll- und Vernetzungsphase eines Zyklus zusammengehalten. Der Druckgeber 20 erzeugt ein elektrisches Gleichspannungssignal, welches mit der Signalleitung 23 einem Verstärker 24 aufgeschaltet wird. Dieser übermittelt das verstärkte Drucksignal über die Signalleitung 25 zu einer Vergleicher- und Recheneinheit 26. Darin wird das Drucksignal als IST-Wert mit einem vorgebenen SOLL-Wert verglichen. Aus einer Abweichung zwischen IST- und SOLL-Wert errechnet die Einheit 26 einen Regelimpuls und überträgt diesen über die Leitung 27 auf den CNC-Druckregler 28. Dieser ist einerseits mit einer Verstärkerstufe 28a und andererseits mit einer Regelstufe 28b ausgerüstet. Der Regler 28 errechnet nach Maßgabe des von der Vergleichereinheit 26 errechneten Fehlersignals einen Stellimpuls zur regelbaren Einstellung des Zuhaltedruckventils 33. Dieser Stellimpuls wird mit der Stellimpuls-Übertragungsleitung 29 auf die Eingangseinheit 30 des unterlegten Druckregelkreises 31 übertragen. Dabei dient die Eingangseinheit 30 einerseits als Regelimpuls-Verstärker und andererseits als Vergleichereinheit zwischen dem vom Druckregler 28 vorgegebenen Zuhaltedruck-SOLL-Wert P1 und dem Zuhalte-IST-Wert P2. Hieraus wird in der Eingangseinheit 30 ein Korrekturwert K errechnet und dieser Einstellimpuls zur Einstellungskorrektur dem Zuhaltedruck-Regelventil 33 aufgeschaltet. Die Ventilstellung wird vom Geber 32 ermittelt und als Stell-IST-Wert der Eingangseinheit 30 aufgeschaltet. Diese prüft die erforderliche Übereinstimmung zwischen dem Ventilstellungs-IST-Wertes und dem Stellimpuls-Korrekturwert H und veranlaßt im Falle einer Abweichung die Aufschaltung eines Fehlersignals zur Berichtigung des Korrekturwertes K, wodurch die Stellung des Zuhaltedruck-Ventils 33 entsprechend korrigiert wird. Nach Maßgabe der Stellung des Zuhaltedruck-Ventils 33 wird im hydraulischen System (im einzelnen nicht näher dargestellt) ein Zuhaltedruck-SOLL-Wert P1 im Zuhaltedruck-Zylinder 22a erzeugt und damit vom Schließdruck-Zylinder 22a, 22b ein einstellbarer Schließdruck S erzeugt, welcher von außen auf die Werkzeugplatten 21a, 21b wirkt.

Der hydraulische Druck im Zuhaltedruck-Zylinder 22a wird von dem Druckgeber 36 ermittelt und als Druck-IST-Wert P2 mit der Signalleitung 44 der Eingangseinheit 30 zum Vergleich mit dem Druck-SOLL-Wert P1 aufgeschaltet.

Zusätzlich zum Forminnendruck, gemessen mit Hilfe des Druckgebers 20, kann gemäß Anspruch 9 der Arbeitsdruck im Spritzzylinder 38 der Injektionsvorrichtung 37 und/oder der Spritzmassendruck des plastifizierten Kunststoffs am Schnekkenende 39 vor der Düse des Spritzkanals mit dem Druckgeber 41 ermittelt und die so erhaltenen Drucksignale können mit Hilfe der Signalleitung 42, 43 ebenfalls der Vergleicher-und Recheneinheit 26 aufgeschaltet werden, um das darin zu errechnende Fehlersignal nach Maßgabe der gemessenen Druckwerte zu korrigieren.

Insgesamt ist die regeltechnische Ausgestaltung der Regelschaltung nach dem in der Fig. 2 gezeigten Schema unkompliziert und mit vergleichsweise geringem technischem Aufwand durchführbar. In überraschend einfacher und sinnvoller Weise werden somit die Druckschwankungen im Innenraum des Werkzeugs durch Einwirkung von regelbaren Druckimpulsen auf eine Außenfläche des Formwerkzeugs und insbesondere durch entsprechende Einstellung des Formschließdruckes abgebaut. Hieraus ergibt sich eine optimale Lösung der eingangs gestellten Aufgabe.

## Patentansprüche

1. Verfahren zur Herstellung von Formteilen aus plastifizierbaren, härtbaren bzw. vernetzenden Kunststoff-Formmassen durch Spritzgießen unter Verwendung eines teilbaren Formwerkzeuges, wobei die Spritzgußmasse nach vollständiger volumetrischer Füllung des Werkzeuginnenraumes während der Aushärtephase zeitlichen Änderungen ihrer Zustandsparameter wie Temperatur, Vernetzungsgrad, Druck oder spezifischem Volumen unterworfen ist und diese im Innenraum des geschlossenen Werkzeuges einen an- und absteigenden Verlauf des Forminnendrucks zur Folge haben,
**dadurch gekennzeichnet**,
daß den Druckschwankungen im Innenraum des Werkzeugs durch Einwirkung von Druckimpulsen über wenigstens eine Außenfläche des Formwerkzeuges beim Einspritzen des Kunststoffs entgegengewirkt wird, wobei die Druckhöhe der Druckimpulse nach Maßgabe des Druckverlaufs des Forminnendrucks veränderlich und zu diesem im gegenläufigen Sinne wirkend selbsttätig eingestellt wird.

2. Verfahren nach Anspruch 1,
**dadurch gekennzeichnet,**
daß der Forminnendruck in fortlaufenden Messungen kontrolliert und dabei aus einer Änderung desselben ein erster Regelimpuls abgeleitet wird, nach dessen Maßgabe die Druckhöhe der Druckimpulse eingestellt wird.

3. Verfahren nach den Ansprüche 1 und 2,
**dadurch gekennzeichnet,**daß ein
inkrementeller Anstieg des Forminnendrucks durch Verringerung und ein dekrementeller Abfall des Forminnendrucks durch Erhöhung der Druckimpulse ausgeglichen wird.

4. Verfahren nach einem der Ansprüche 1 bis 3,
**dadurch gekennzeichnet,**
daß vermittels der veränderlich einstellbaren Druckimpulse der Forminnendruck bei einem inkrementellen Druckanstieg durch Vergrößerung des Raumvolumens und bei einem dekrementellen Druckabfall durch Verkleinerung des Raumvolumens des Formwerkzeuges ausgeglichen wird.

5. Verfahren nach einem der Ansprüche 1 bis 4,
**dadurch gekennzeichnet,**
daß die nach Maßgabe der Größe des Regelimpulses einstellbaren Druckimpulse dem Formschließdruck überlagerte Druckkomponenten sind.

6. Verfahren nach einem der Ansprüche 1 bis 5,
**dadurch gekennzeichnet,**
daß bei fallendem Forminnendruck die Kraft des Formschließdruckes verstärkt und bei steigendem Forminnendruck die Kraft des Formschließdruckes verringert wird.

7. Verfahren nach einem der Ansprüche 1 bis 6,
**dadurch gekennzeichnet,**
daß die Vergrößerung des Raumvolumens des geschlossenen Formwerkzeuges durch Verringerung der Kraft des Formschließdruckes und die Verringerung des Raumvolumens durch Erhöhung des Formschließdruckes herbeigeführt wird.

8. Verfahren nach einem der Ansprüche 1 bis 7,
**dadurch gekennzeichnet,**
daß der Forminnendruck in ein elektrisches Signal umgewandelt und dieses mit einem vorgegebenen SOLL-Wert-Signal verglichen und aus einer positiven oder negativen Abweichung des IST-Wertes vom SOLL-Wert ein Regelimpuls zur Nachführung des Formschließdruckes im gegenläufigen Wirkungssinn errechnet wird.

9. Verfahren nach einem der Ansprüche 1 bis 8,
**dadurch gekennzeichnet,**
daß zusätzlich zum Forminnendruck der Arbeitsdruck im Spritzzylinder und/oder der Spritzmassendruck des plastifizierten Kunststoffs am Schneckenende bzw. vor der Düse des Spritzkanals mit jeweils einem zugeordnet vorgegebenen SOLL-Wert verglichen und aus einer Abweichung ein zusätzlicher Regelimpuls errechnet und dem ersten Regelimpuls aufgeschaltet wird.

## Claims

1. Method of manufacturing moulded parts from plasticisable, hardenable or cross-linking mould masses of synthetic material by injection moulding with use of a separable mould tool, wherein the injection casting mass is subjected to temporal changes in its state parameters, such as temperature, degree of cross-linkage, pressure or specific volume, after complete volumetric filling of the tool cavity and during the curing phase, and these have as a consequence a rising and falling course of the mould internal pressure in the cavity of the closed tool, characterised thereby that the pressure fluctuations in the cavity of the tool are counteracted by application of pressure pulses by way of at least one outer surface of the mould tool during injection of the synthetic material, wherein the pressure height of the pressure pulses is variable in proportion to the pressure course of the mould internal pressure and is automatically set to act in opposite sense thereto.

2. Method according to claim 1, characterised thereby that the mould internal pressure is checked in continuous measurements and a first regulating pulse, in proportion to which the pressure height of the pressure pulses is set, is in that case derived from a change therein.

3. Method according to claims 1 and 2, characterised thereby that an incremental rise in the mould internal pressure is compensated for by reducing, and a decremental drop in the mould internal pressure by increasing, the pressure pulses.

4. Method according to one of claims 1 to 3, characterised thereby that in the case of an incremental pressure rise the mould internal pressure is compensated for by enlargement, and in the case of a decremental pressure drop by reduction, of the space volume of the mould tool by way of the variably settable pressure pulses.

5. Method according to one of claims 1 to 4, characterised thereby that the pressure pulses settable in proportion to the size of the regulating pulse are pressure components superimposed on the mould closing pressure.

6. Method according to one of claims 1 to 5, characterised thereby that the force of the mould closing pressure is strengthened for falling mould internal pressure and is diminished for rising mould internal pressure.

7. Method according to one of claims 1 to 6, characterised thereby that the enlargement of the space volume of the closed mould tool is caused by reducing the force of the mould closing pressure and the reduction of the space volume is caused by increasing the mould closing pressure.

8. Method according to one of claims 1 to 7, characterised thereby that the mould internal pressure is converted into an electrical signal, this is compared with a preset target value signal, and a regulating pulse for resetting the mould closing pressure in the reciprocal sense of action is computed from a positive or negative deviation of the actual value from the target value.

9. Method according to one of claims 1 to 8, characterised thereby that, in addition to the mould internal pressure, the operating pressure in the injection cylinder and/or the injection mass pressure of the plasticised synthetic material at the worm end or ahead of the nozzle of the injection channel is compared each time with an associated preset target value and an additional regulating pulse is computed from a deviation and superimposed on the first regulating pulse.

## Revendications

1. Procédé pour la fabrication de pièces moulées par moulage par injection, de masses moulables de matière synthétique durcissable ou réticulable, à l'aide d'un moule divisible, la masse moulable injectée étant soumise, après remplissage volumétique complet de l'espace intérieur du moule et pendant la phase de durcissage, à des modifications dans le temps de ses paramètres d'état, comme la température, le degré de réticulation, la pression ou le volume spécifique, et celles-ci ayant pour conséquence une allure croissante et décroissante de la pression interne de l'espace intérieur du moule fermé, caractérisé en ce qu'on agit à l'encontre des variations de pression à l'intérieur du moule par l'action d'impulsions de pression sur au moins une surface extérieure du moule, lors de l'injection de la matière synthétique, l'amplitude des impulsions de pression étant variable en fonction de l'allure de la pression intérieure du moule et étant réglée automatiquement de façon opposée à celle-ci.

2. Procédé selon la revendication 1 caractérisé en ce qu'on contrôle la pression intérieure du moule par des mesures continues et déduit une première impulsion de réglage à partir d'une variation de ladite pression intérieure, impulsion de réglage qui détermine l'amplitude des impulsions de pression.

3. Procédé selon les revendications 1 et 2 caractérisé en ce qu'un accroissement incrémental de la pression intérieure du moule est compensé par une réduction des impulsions de pression et une diminution décrémentale de la pression intérieure du moule est compensée par un accroissement des impulsions de pression.

4. Procédé selon l'une des revendications 1 à 3 caractérisé en ce qu'on compense la pression intérieure du moule moyennant les impulsions de pression variables par augmentation du volume intérieur du moule lors d'un accroissement incrémental de la pression, et par réduction du volume intérieur du moule lors d'une diminution décrémentale de la pression.

5. Procédé selon l'une des revendications 1 à 4 caractérisé en ce que les impulsions de pression réglables en fonction de l'amplitude de l'impulsion de réglage consistent en des composantes de pression superposées à la pression de fermeture du moule.

6. Procédé selon l'une des revendications 1 à 5 caractérisé en ce que, lors d'une diminution de la pression intérieure du moule, on augmente la force de la pression de fermeture du moule, et que, lors d'un accroissement de la pression intérieure du moule, on réduit la force de la pression de fermeture du moule.

7. Procédé selon l'une des revendications 1 à 6 caractérisé en ce qu'on obtient une augmentation du volume intérieur du moule fermé par une réduction de la force de la pression de fermeture du moule, et une diminution du volume intérieur du moule par augmentation de la pression de fermeture.

8. Procédé selon l'une des revendications 1 à 7 caractérisé en ce qu'on transforme la pression à l'intérieur du moule en un signal électrique et compare celui-ci à un signal de consigne prédéterminé et en ce qu'on détermine une impulsion de réglage à partir d'une variation positive ou négative de la valeur instantanée par rapport à la valeur de consigne, en vue de la commande de la pression de fermeture du moule en sens inverse.

9. Procédé selon l'une des revendications 1 à 8 caractérisé en ce que, en plus de la pression à l'intérieur du moule, on compare encore la pression effective dans le cylindre d'injection et/ou la pression de la masse synthétique plastifiée à l'extrémité de la vis ou en amont de l'éjecteur du canal d'injection à une valeur de consigne correspondante associée et en ce qu'on détermine une impulsion de réglage supplémentaire à partir d'une variation, que l'on superpose à la première impulsion de réglage.
